Europäisches Patentamt

(19) European Patent Office

Office européen des brevets

(11) Publication number: **0 094 243**
**B1**

(12) **EUROPEAN PATENT SPECIFICATION**

(45) Date of publication of patent specification: **09.08.89**

(21) Application number: **83302628.9**

(22) Date of filing: **10.05.83**

(51) Int. Cl.⁴: **G 11 B 15/32**

(54) **Tape drive device.**

(30) Priority: **12.05.82 JP 79430/82**

(43) Date of publication of application:
**16.11.83 Bulletin 83/46**

(45) Publication of the grant of the patent:
**09.08.89 Bulletin 89/32**

(84) Designated Contracting States:
**DE FR NL**

(56) References cited:
**DE-A-1 574 310**
**DE-A-1 933 145**
**DE-A-2 361 094**
**DE-A-3 032 650**
**DE-A-3 151 103**
**DE-A-3 151 192**
**US-A-3 477 794**
**US-A-3 934 839**
**US-A-4 000 866**
**US-A-4 133 497**
**IBM TECHNICAL DISCLOSURE BULLETIN, vol.
13, no. 8, January 1971, page 2378; R.A.
STOLZ: "Tape reel holder"**

(73) Proprietor: **KABUSHIKI KAISHA TOSHIBA
72, Horikawa-cho Saiwai-ku
Kawasaki-shi Kanagawa-ken 210 (JP)**

(72) Inventor: **Morinaga, Kaoru c/o Patent Division
Tokyo Shibaura Denki K. K. 72, Horikawa-cho
Saiwai-ku Kawasaki-shi Kanagawa-ken (JP)**
Inventor: **Kawakami, Hiroshi c/o Patent Division
Tokyo Shibaura Denki K. K. 72, Horikawa-cho
Saiwai-ku Kawasaki-shi Kanagawa-ken (JP)**
Inventor: **Kotoda, Yoshihiro c/o Patent Division
Tokyo Shibaura Denki K. K. 72, Horikawa-cho
Saiwai-ku Kawasaki-shi Kanagawa-ken (JP)**

(74) Representative: **Newstead, Michael John et al
Haseltine Lake & Co. 28 Southampton Buildings
Chancery Lane
London, WC2A 1AT (GB)**

Courier Press, Leamington Spa, England.

## Description

The present invention relates to a tape drive device, more particularly to a tape drive device for a tape player for driving a reel hub rotatably mounted within a tape housing of a cartridge type tape.

In a tape player for the use of cartridge type tapes, for example conventional cassette tapes, a tape device is used for driving a reel hub rotatably mounted within a tape housing of the cartridge type tape so as to take up a magnetic tape about the reel hub. The tape drive device includes a base portion adapted for being driven by a driving source within the tape player and a spindle shaft portion adapted for driving the reel hub in engagement therewith.

In conventional tape drive devices, the base portion and the spindle shaft portion are made in one body or at least combined together in connection with each other directly. Tape players equipped with conventional tape drive devices, however, have a drawback that the wow and flutter characteristics thereof are insufficient. This is due to the fact that a conventional tape drive device transmits mechanical vibrations arising in the driving source to the magnetic tape. When a tape portions in running across a recording and/or reproducing head vibrates, the vibration of the tape portion badly affects recording or reproduction by the head. Some vibration arises in the driving source originated by cogs in an electric motor or gearing within the driving source. The vibration of the driving source is transmitted to the reel hub through the tape drive devices. The vibration of the reel hub is then transmitted to the tape portion. Some other vibration also arises in the tape itself in running by a sympathetic vibration of the tape due to the vibration originating in the driving source. The vibration of the driving source thus disturbs directly or indirectly the recording or the reproduction.

Further, the spindle shaft portion of the tape drive device sometimes hardly engages with the reel hub of the cartridge type tape, in a loading operation of the cartridge type tape on to the tape player. When teeth formed on an inner surface of the reel hub happen to meet with blades formed on the outer surface of the spindle shaft portion of the tape drive device by their edges in their longitudinal directions, the loading of the cassette tape is prevented or the reel hub and the tape drive device are damaged.

US patent 4133497 shows a drive arrangement in which the drive comprises a base portion and a spindle shaft portion with a spring positioned between the portions and connected to each portion. The spindle shaft portion is connected for driving power to the spindle by means of a key in a keyway but the key is a loose fit in the keyway which allows the spring to provide an initial resilient take up when drive is applied so reducing initial stress on the tape. Fluctuations will occur with variations of speed of the drive because of the loose fitting of the key in the keyway.

German Specification 1933145 shows a coupling arrangement in a tape drive arrangement which incorporates a spindle connected concentrically to a metal roller through an elastic coupling element. This coupling element is either engaged between the two members under considerable pressure to provide friction coupling of the members or alternatively it must be connected to the members by a binding or gluing agent. Both methods of connection cause rapid deterioration of resilient material and affect the resiliency of the elastic material.

It is, therefore, an object of the invention to provide a tape drive device in which the aforementioned problems are avoided or reduced.

According to the present invention, there is provided a tape drive device for rotating a reel hub rotatably mounted within a tape housing of a cartridge type tape, the device including: a base portion adapted for rotation about an axis thereof by a driving source; a spindle shaft portion concentric with the said base portion and adapted for being engaged by such a reel hub; and a resilient member between and joined to both the said spindle shaft portion and the said base portion characterised in that the resilient member provides the operational driving coupling between the base portion and the spindle shaft portion and is formed with a hollow joint member portion of resilient material with inner and outer polygonal cross-sections which portion fits into or over corresponding polygonal cross-sectioned portions of said base and spindle shaft portions.

The present invention will now be described by way of example, with reference to the accompanying drawings, in which:—

Figure 1 is a sectional side view showing a tape drive device;

Figure 2 is an exploded view of the tape drive device; and

Figure 3 is a graph showing wow and flutter characteristics of tape players.

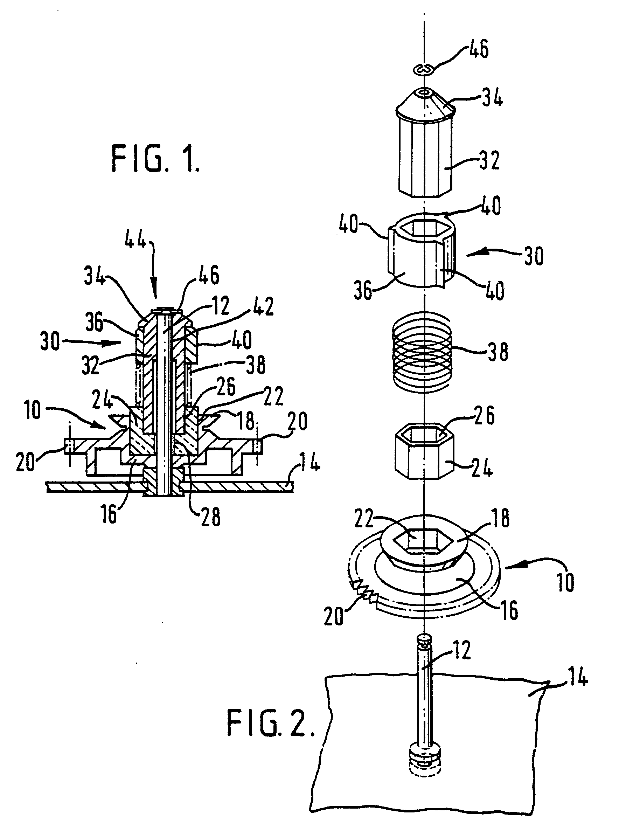

Referring first to Figures 1 and 2, a base member 10 is formed with a round shape and is rotatably mounted on a post 12 protruding from a chassis 14 of the tape player (not shown). Base member 10 includes a bearing portion 16 and a holding portion 18 are respective ends along an axis thereof. Bearing portion 16 is mounted on post 12 and is adapted for being driven by a driving source (not shown) within the tape player. Bearing portion 16 is driven by enagement of a peripheral gear section 20 thereof with the driving source or by engagement of a conventional friction gear (not shown) attached on bearing portion 16 with the driving source. Holding portion 18 defines a recess 22 with a hexagonal shape which recess receives a resilient joint member 24 made of rubber.

Resilient joint member 24 is formed in the shape of a pillar with a hexagonal outer surface and is mounted on holding portion 18 of base member 10 with one end fitting in hexagonal recess 22. Resilient joint member 24 defines a hexagonal recess 26 at its other end and a through-hole 28, both concentric with the axis of resilient joint member 24. Post 12 freely penetrates through-hole 28 of resilient joint member 24 and the latter receives a spindle shaft assembly 30 in its recess 26.

Spindle shaft assembly 30 includes a shaft portion 32 and a flange portion 34 at its respective ends along its axis. Shaft portion 32 is formed in the shape of a pillar with a hexagonal outer surface and is mounted on resilient joint member 24 with its hexagonal outer surface fitting into recess 26 of resilient joint member 24. Spindle shaft assembly 30 further includes a sleeve 36 and a coil spring 38. Sleeve 36 has a hexagonal inner surface and an approximately round outer surface with three blades 40 parallel with the axis of the sleeve 36. Sleeve 36 is mounted on shaft portion 32 and is slidable along the axis of shaft portion 32 but is not rotatable about the axis, due to the hexagonal surfaces of shaft portion 32 and sleeve 36 engaging each other. Sleeve 36 is biased against flange portion 34 by coil spring 38 mounted between sleeve 36 and resilient joint member 24. The three blades 40 on the outer surface of sleeve 36 are adapted for engagement with teeth of a reel hub rotatably mounted within a tape housing of a conventional cartridge type tape. Spindle shaft assembly 30 defines hollow through-hole 42 through which post 12 penetrates.

The resultant tape drive device 44 thus comprises base member 10, resilient joint member 24 and spindle shaft assembly 30 and is rotatably mounted on post 12 protruding from chassis 14 of the tape player and is prevented from disconnection from post 12 by an E-ring 46 fastened to a penetrating end of post 12.

Tape drive device 44 equipped in the tape player drives the reel hub within the tape housing to take up the tape. During operation of tape drive device 44, base member 10 is driven by the driving source through the engagement of gear section 20 or the friction gear with the driving source. Mechanical vibrations arising in the driving source as aforementioned are, therefore, transmitted to base portion 10 from the driving source. The mechanical vibrations are, however, substantially absorbed or eliminated by resilient joint member 24 before their transmission into spindle shaft assembly 30. Therefore, a tape taken up by the reel hub is effectively isolated from the mechanical vibrations originating from the driving source.

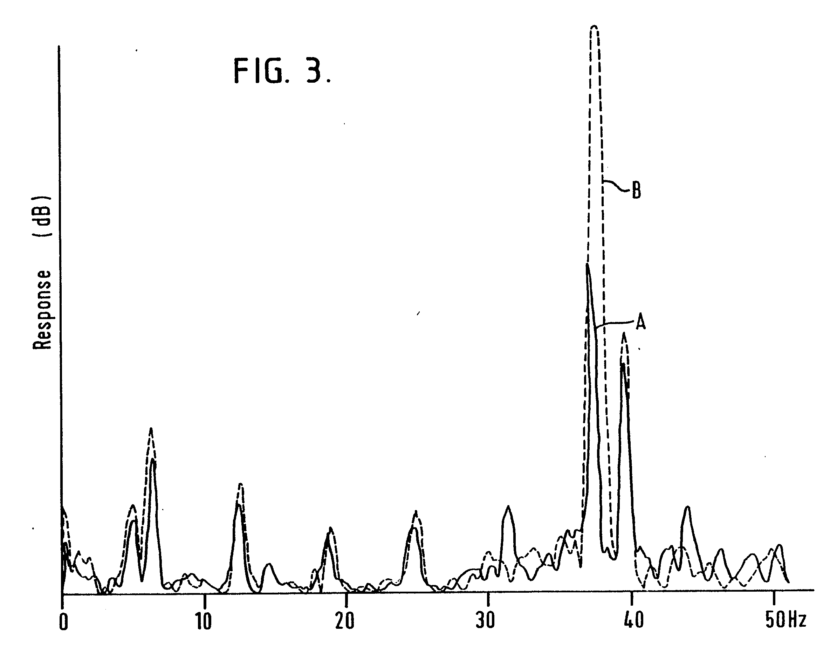

Figure 3 is a graph showing the wow and flutter characteristics of a tape player when tape drive drive 44 is equipped and when a conventional tape drive device is equipped. The solid curve A represents the wow and flutter characteristics in a tape player equipped with tape drive device 44 of Figures 1 and 2; and the broken line curve B represents the wow and flutter characteristics of a tape player equipped with a conventional tape drive device which is made in one body but with approximately the same size as tape drive device 44 of Figures 1 and 2. It is to be seen from Figure 3 that the tape drive device 44 contributes an improvement of both the wow characteristic at a lower frequency range around 5 Hz and the flutter characteristic at a higher frequency range around 40 Hz.

Further, tape drive device 44 of Figures 1 and 2 is easily brought into engagement with the reel hub. That is, when the teeth of the reel hub happen to meet with blades 40 of sleeve 36 of spindle shaft assembly 30, sleeve 36 is not only able to slide along shaft portion 32 but also able to rotate about post 12 together with shaft portion 32, because resilient joint member 24 is deformed so as to allow rotation of sleeve 36 and shaft portion 32 in spite of base member 10 being fixed.

**Claims**

1. A tape drive device (44) for rotating a reel hub rotatably mounted within a tape housing of a cartridge type tape, the device including: a base portion (10) adapted for rotation about an axis thereof by a driving source; a spindle shaft portion (30) concentric with the said base portion and adapted for being engaged by such a reel hub; and a resilient member (24) between and joined to both the said spindle shaft portion (30) and the said base portion (10) characterised in that the resilient member (24) provides the operational driving coupling between the base portion (10) and the spindle shaft portion (30) and is formed with a hollow joint member portion of resilient material with inner and outer polygonal cross-sections which portion fits into or over corresponding polygonal cross-sectioned portions (22, 32) of said base and spindle shaft portions.

2. A tape drive device (44) according to claim 1, characterised in that the said resilient joint member (24) is made of rubber.

**Patentansprüche**

1. Bandantriebseinrichtung (44) zum Drehen einer Bandspulennabe, die drehbar innerhalb eines Bandgehäuses eines Kassettenbandes montiert ist, welche Einrichtung enthält:
— ein Trägerteil (10), das dazu bestimmt ist, sich mittels einer Antriebsquelle um seine Achse zu drehen,
— ein Spindelschaftteil (30), das konzentrisch mit dem Trägerteil angeordnet ist und dazu bestimmt ist, in Eingriff mit einer solchen Bandspulennabe zu treten, und
— eine elastisches Element (24), das zwischen dem Spindelschaftteil (30) und dem Trägerteil (10) angeordnet und mit diesen verbunden ist, dadurch gekennzeichnet,
— daß das elastische Element (24) die wirksame Antriebsverbindung zwischen dem Trägerteil (10) und dem Spindelschaftteil (30) herstellt und als eine hohles Verbindungsteil aus elastischem Material mit inneren und äußeren vieleckigen Querschnitten ausgebildet ist, welches Teil in oder über entsprechende mit vieleckigem Querschnitt versehene Elemente (22, 32) des Trägerteils paßt.

2. Bandantriebseinrichtung (44) nach Anspruch 1, dadurch gekennzeichnet, daß das elastische verbindende Element (24) aus Gummi hergestellt ist.

**Revendications**

1. Un dispositif d'entraînement de bande (44) pour faire tourner un moyeu de bobine monté en rotation à l'intérieur d'un boîtier de bande d'une bande de type en cartouche, le dispositif comprenant: une partie de socle (10) adaptée pour tourner autour d'un axe de ce socle sous l'effet d'une source d'entraînement; une partie d'arbre (30) concentrique avec ladite partie de socle et adaptée pour être mise en prise avec un moyeu de bobine; et un élément élastique (24) placé entre et assemblé à la fois à ladite partie d'arbre (30) et à ladite partie de socle (10), caractérisé en ce que l'élément élastique (24) crée l'accouplement d'entraînement fonctionnel entre la partie de socle (10) et la partie d'arbre (30) et en ce qu'il est constitué avec un partie creuse d'élément d'assemblage en matériau élastique ayant des sections droites intérieure et extérieure polygonales, laquelle partie s'adapte à l'intérieur de ou sur les parties (22, 32) à section droite polygonale correspondantes de ladite partie de socle et de ladite partie d'arbre.

2. Un dispositif d'entraînement de bande (44) selon la revendication 1, caractérisé en ce que ladite élément (24) d'assemblage élastique est fabriqué en caoutchouc.

FIG. 1.

FIG. 2.

FIG. 3.